# EUROPÄISCHE PATENTSCHRIFT

(11) **EP 2 405 673 B1**
(45) Veröffentlichungstag und Bekanntmachung des Hinweises auf die Patenterteilung: **08.08.2018**
(21) Anmeldenummer: 11169403.0
(22) Anmeldetag: 10.06.2011
(51) Int. Cl.: H04R 25/00, G10L 17/00

(54) **Verfahren zum Lokalisieren einer Audioquelle und mehrkanaliges Hörsystem**
Method for localising an audio source and multi-channel audio system
Procédé de localisation d'un source audio et système auditif à plusieurs canaux

(30) Priorität: 07.07.2010 DE 102010026381
(43) Veröffentlichungstag der Anmeldung: 11.01.2012
(73) Patentinhaber: Sivantos Pte. Ltd., Singapore 539775 (SG)
(72) Erfinder: Bouse, Vaclav, 91058 Erlangen (DE)
(74) Vertreter: FDST Patentanwälte

(56) Entgegenhaltungen:
- EP-A1- 1 858 291
- EP-A1- 2 200 341
- EP-A2- 1 962 556
- WO-A1-2009/072040
- US-A1- 2005 027 528

## Beschreibung

Die Arbeiten, die zu der vorliegenden Erfindung geführt haben, wurden gefördert im Rahmen des European Community's Seventh Framework Programme (FP7/2007-2013) unter Fördervertrag Nr. 214699.

Die vorliegende Erfindung betrifft ein Verfahren zum Lokalisieren mindestens einer Audioquelle mit einem mehrkanaligen Hörsystem. Darüber hinaus betrifft die vorliegende Erfindung ein entsprechendes mehrkanaliges Hörsystem mit mehreren Eingangskanälen und insbesondere auch ein binaurales Hörsystem. Unter einem "binauralen Hörsystem" versteht man hier ein System, mit dem beide Ohren eines Nutzers mit Schall versorgt werden können. Insbesondere versteht man darunter ein binaurales Hörgerätesystem, bei dem der Nutzer an beiden Ohren ein Hörgerät trägt, die das jeweilige Ohr versorgen.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO), Hörgerät mit externem Hörer (RIC: receiver in the canal) und In-dem-Ohr-Hörgeräte (IdO), z.B. auch Concha-Hörgeräte oder Kanal-Hörgeräte (ITE, CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

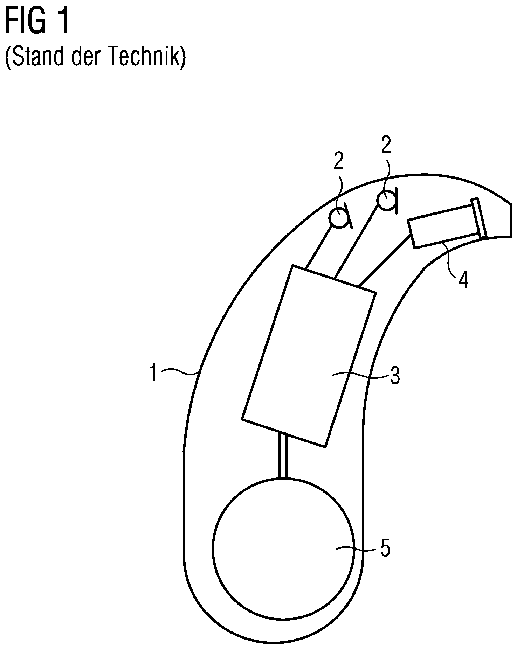

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Energieversorgung des Hörgeräts und insbesondere die der Signalverarbeitungseinheit 3 erfolgt durch eine ebenfalls ins Hörgerätegehäuse 1 integrierte Batterie 5.

Im Allgemeinen zielt ein rechnergeschütztes Szeneanalysesystem (CASA: Computational Scene Analysis System) auf die Beschreibung einer akustischen Szene durch örtliche Lokalisation und Klassifikation der akustischen Quellen sowie vorzugsweise auch der akustischen Umgebung. Zur Anschauung sei hier das Beispiel des so genannten "Party-Cocktail-Problems" dargestellt. Viele sich unterhaltende Sprecher erzeugen ein Hintergrundsprachgeräusch, zwei Personen unterhalten sich nahe beim Beobachter (gerichteter Schall), etwas Musik kommt aus einer anderen Richtung und die Raumakustik ist etwas verhallt. Ähnlich wie das menschliche Gehör in der Lage ist, die verschiedenen Audioquellen zu lokalisieren und zu unterscheiden, versucht ein CASA-System diese Funktion in ähnlicher Weise nachzuahmen, so dass es zumindest jede Quelle aus dem Schallgemisch lokalisieren und klassifizieren (z. B. Sprache, Musik, Störgeräusch etc.) kann. Eine diesbezügliche Information ist nicht nur für eine Hörgeräteprogrammwahl wertvoll, sondern beispielsweise auch für einen so genannten Beamformer (örtliches Filter), der in die gewünschte Richtung gelenkt werden kann, um das gewünschte Signal für einen Hörgeräteträger zu verstärken.

Ein übliches CASA-System arbeitet derart, dass das Audiosignal durch eine Fourier-Transformation oder durch eine ähnliche Transformation, wie z. B. Wavelets, Gamma-Ton-Filterbank, etc., in den Zeit-Frequenz-Bereich (T-F) transformiert wird. Dabei wird das Signal also in eine Vielzahl von Kurzzeitspektren überführt.

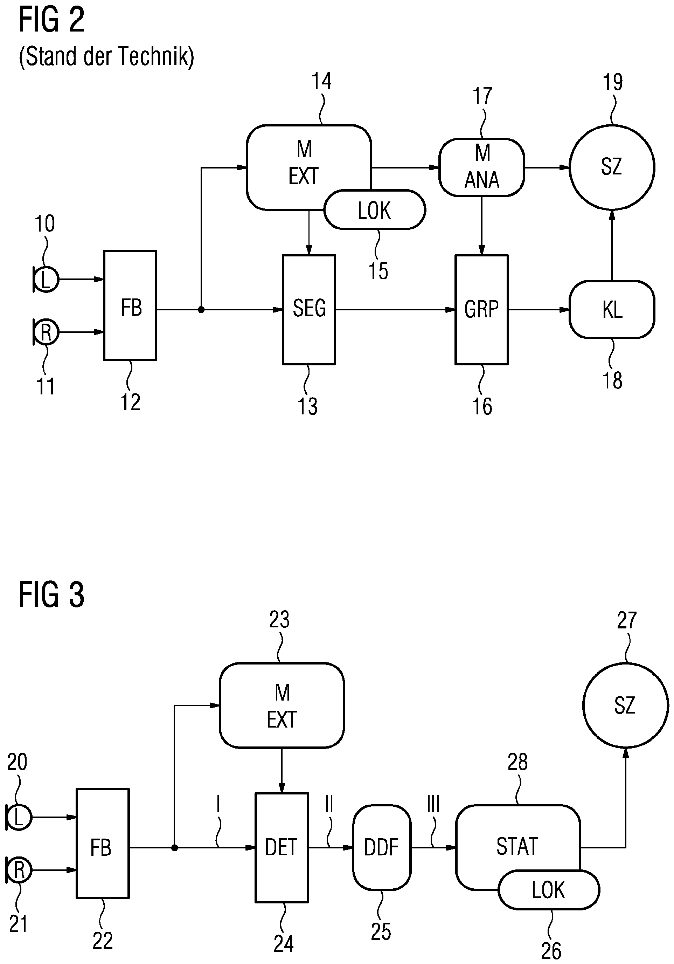

FIG 2 zeigt ein Blockdiagramm eines derartigen üblichen CASA-Systems. Die Signale eines Mikrofons 10 eines linken Hörgeräts und eines Mikrofons 11 eines rechten Hörgeräts werden gemeinsam einer Filterbank 12 zugeführt, die die genannte Transformation in den T-F-Bereich durchführt. Das Signal im T-F-Bereich wird anschließend in einer Segmentierungseinheit 12 in separate T-F-Blöcke segmentiert. Bei den T-F-Blöcken handelt es sich um Kurzzeitspektren, wobei die Blöcke üblicherweise nach einer so genannten "T-F-Onset-Detektion" beginnen, also wenn das Spektrum eines Signals einen gewissen Pegel überschreitet. Die Länge der Blöcke wird durch Analyse anderer Merkmale bestimmt. Zu diesen Merkmalen gehören typischerweise ein Offset und/oder Kohärenz. Es ist daher eine Merkmalsextraktionseinheit 14 vorgesehen, die Merkmale aus dem Signal im T-F-Bereich extrahiert. Derartige Merkmale sind beispielsweise interaurale Zeitdifferenz (ITD), interaurale Pegeldifferenz (ILD), Block-Kreuzkorrelation, Grundfrequenz und dergleichen. Eine Lokalisierung 15 jeder Quelle lässt sich mithilfe der geschätzten bzw. extrahierten Merkmale (ITD, ILD) durchführen. Die extrahierten Merkmale aus der Extraktionseinheit 14 können aber auch dazu herangezogen werden, die Segmentierungseinheit 13 zu steuern.

Die nach der Segmentierungseinheit 13 erhaltenen relativ kleinen Blöcke werden in einer Gruppierungseinheit 16 wieder zusammengesetzt, um die unterschiedlichen Quellen darzustellen. Hierzu werden die extrahierten Merkmale der Extraktionseinheit 14 einer Merkmalsanalyse 15 unterzogen, deren Analyseergebnisse für die Gruppierung herangezogen werden. Die so gruppierten Blöcke werden einer Klassifikationseinheit 18 zugeführt, mit der erkannt werden soll, von welcher Art die Quelle ist, die das Signal einer Blockgruppe erzeugt. Das Ergebnis dieser Klassifikation und die Merkmale der Analyse 17 werden zur Beschreibung einer Szene 19 genutzt.

Die Beschreibung einer akustischen Szene auf diese Weise ist jedoch vielfach fehlerbehaftet. Insbesondere ist es nicht leicht, mehrere Quellen aus einer Richtung genau zu trennen bzw. zu beschreiben, weil die kleinen T-F Blöcke nur wenige Informationen enthalten.

In dem Dokument EP 1 962 556 A2 sind ein Verfahren und eine Hörvorrichtung zur Verbesserung der räumlichen Wahrnehmung beschrieben, bei welchen durch einen Klassifizierer ein Eingangssignal klassifiziert werden kann und eine Steuerung der Hörvorrichtung in Abhängigkeit von dem Klassifikationsergebnis ermöglicht ist. Dem Klassifizierer kann ein Richtmikrofon oder ein Blinde-Quellentrennung-Algorithmus nachgeschaltet sein. Die hierdurch aufgeteilten Signale der Schallquellen können dann durch eine räumliche Verarbeitung für eine akustische Wiedergabe derart verarbeitet werden, dass sie von virtuellen Quellen zu kommen scheinen, die andere Positionen im Raum aufweisen als die tatsächlichen Schallquellen.

In dem Dokument EP 2 200 341 A1 ist ein Hörhilfesystem beschrieben, bei welchem Störsignale unterdrückt und Nutzsignale hervorgehoben werden können. Mittels einer Quellentrennungseinrichtung wird ein Eingangssignal in mehrere quellenspezifische Empfangssignale aufgeteilt. Es erfolgt für jedes einzelne quellenspezifische Eingangssignal eine Kennzeichnung als Stör- oder Nutzsignal durch manuelle Betätigung eines Bedienelements durch den Benutzer. Die so als Stör- oder Nutzsignal klassifizierten quellenspezifischen Empfangssignale werden anschließend einer Analyseeinrichtung zugeführt, wo unter anderem die Einfallsrichtung akustischer Signale in das Mikrofonsystem bestimmt werden kann.

In dem Dokument US 2005/027528 A1 ist ein Verfahren zur Sprecheridentifikation beschrieben, bei dem in einem gestörten Sprachsignal die für die Identifikation nutzbaren Sprachanteile erkannt werden. Um möglichst viele Sprachanteile nutzen zu können, wird für jeden Sprachanteil ein optimaler Identifikationsalgorithmus ausgewählt, wobei die Auswahl in Abhängigkeit von Sprachmerkmalen erfolgt, die in dem jeweiligen Sprachanteil enthalten sind, beispielsweise Vokalen, Nasalen, Ploziven oder spektral flachen Sprachlauten.

In dem Dokument WO 2009/072040 A1 ist eine Hörhilfe für eine binaurale Versorgung eines Benutzers beschrieben. Um ein akustisches Signal zwischen zwei Hörgeräten zu übertragen, ist eine Bandbreitenreduktion vorgesehen, um die Menge der zu übertragenden Daten zu reduzieren.

In dem Dokument EP 1 858 291 A1 ist ein Hörgerät beschrieben, bei welchem ein Klassifizierer einem Beamformer für eine gerichtete Signalerfassung und einer Merkmalsextraktion nachgeschaltet ist. Die Informationen für eine gerichtete Erfassung von Schallquellen, d. h. die Lokalisation, findet bei dem Hörgerät entlang des Datenverarbeitungspfads vorn in einem Beamformer-Controller statt.

Die Aufgabe der vorliegenden Erfindung besteht somit darin, das Detektieren und Lokalisieren von akustischen Quellen bei einem mehrkanaligen Hörsystem zu verbessern.

Erfindungsgemäß wird diese Aufgabe gelöst durch ein Verfahren zum Lokalisieren mindestens einer Audioquelle mit einem mehrkanaligen Hörsystem, wie es in Anspruch 1 definiert ist. Darüber hinaus wird erfindungsgemäß bereitgestellt ein mehrkanaliges Hörsystem mit mehreren Eingangskanälen, nach Anspruch 7. In vorteilhafter Weise wird vor der Lokalisation eine Detektion bzw. Klassifikation bekannter Signalkomponenten durchgeführt. Dadurch können Signalanteile systematisch ihrem Inhalt entsprechend zusammengefasst werden, bevor eine Lokalisation stattfindet. Das Zusammenfassen der Signalanteile führt zu einer erhöhten Informationsmenge bezüglich einer bestimmten Quelle, so dass deren Lokalisierung zuverlässiger durchgeführt werden kann.

Bei der Erfindung werden vor dem Lokalisieren in Abhängigkeit von dem detektierten Signal Signalanteile aus dem Eingangssignal gefiltert. Es wird also die Detektionsstufe genutzt, um den Nutzsignalanteil bezüglich der zu lokalisierenden Quelle zu erhöhen. Störende Signalanteile werden also ausgefiltert bzw. unterdrückt.

Beim Detektieren werden vorgegebene Merkmale des Eingangssignals untersucht, und bei Vorhandensein der vorgegebenen Merkmale in einer für die Klasse vorgegebenen Intensität gilt das Signal der vorgegebenen Klasse in einem bestimmten Zeitfenster des Eingangssignals als detektiert. Es erfolgt somit eine Detektion mithilfe einer Klassifikation.

Die vorgegebenen Merkmale können harmonische Signalanteile oder die Ausprägung von Formanten sein. Dadurch können insbesondere charakteristische Merkmale über z. B. die Signalklasse "Sprache" gewonnen werden.

In einer speziellen Ausführungsform werden in dem Eingangssignal mehrere Signale der vorgegebenen Klasse detektiert und nach vordefinierten Kriterien unterschiedlichen Audioquellen zugeordnet. Damit können beispielsweise auch unterschiedliche Sprecher beispielsweise auf der Basis der Grundfrequenz der stimmhaften Laute voneinander getrennt werden.

Das Lokalisieren einer Audioquelle kann durch bekannte Lokalisierungsalgorithmen und anschließende kumulative Statistik durchgeführt werden. Damit kann auf bekannte Verfahren zur Lokalisierung zurückgegriffen werden.

Für das Lokalisieren ist es in der Regel notwendig, Signale zwischen den Geräten eines binauralen Hörsystems auszutauschen. Da nun im Vorfeld eine Detektion relevanter Signale stattgefunden hat, ist es für das Lokalisieren nur mehr notwendig, detektierte und ggf. gefilterte Signalanteile des Eingangssignals zwischen den Einzelgeräten des binauralen Hörsystems zu übertragen. Nicht im Hinblick auf eine spezielle Klasse detektierte bzw. nicht klassifizierte Signalanteile werden also nicht übertragen, so dass die Menge an zu übertragenden Daten deutlich reduziert ist.

Die vorliegende Erfindung wird anhand der beigefügten Zeichnungen näher erläutert, in denen zeigen:
- FIG 1: eine Prinzipskizze eines Hörgeräts gemäß dem Stand der Technik;
- FIG 2: ein Blockdiagramm eines bekannten Szene-Analyse-Systems;
- FIG 3: ein Blockdiagramm eines erfindungsgemäßen Systems und
- FIG 4: ein Signaldiagramm verschiedener Signale des Systems von FIG 3 für zwei getrennte Schallquellen.

Die nachfolgend näher geschilderten Ausführungsbeispiele stellen bevorzugte Ausführungsformen der vorliegenden Erfindung dar.

Der wesentliche Gedanke der vorliegenden Erfindung besteht darin, Teile eines Eingangssignals eines mehrkanaligen, insbesondere binauralen Hörsystems in einem ersten Schritt zu detektieren, filtern, und in einem zweiten Schritt eine entsprechende Quelle zu lokalisieren. Für das Detektieren werden bestimmte Merkmale aus dem Eingangssignal extrahiert, so dass eine Klassifikation durchgeführt werden kann.

Ein Blockdiagramm eines erfindungsgemäßen (hier binauralen) Hörsystems ist in FIG 3 dargestellt. Dabei sind lediglich die für die Erfindung wesentlichen Komponenten eingezeichnet. Die weiteren Komponenten eines binauralen Hörsystems ergeben sich beispielsweise aus FIG 1 und deren Beschreibung. Das binaurale Hörsystem gemäß dem Beispiel von FIG 3 umfasst ein Mikrofon 20 in einem linken Gerät, insbesondere Hörgerät, und ein weiteres Mikrofon 21 in einem rechten (Hör)gerät. Alternativ kann auch ein anderes mehrkanaliges Hörsystem mit mehreren Eingangskanälen gewählt werden, z. B. ein einziges Hörgerät mit mehreren Mikrofonen. Die beiden Mikrofonsignale werden wie in dem Beispiel von FIG 2 durch eine Filterbank 22 in den Zeit-Frequenz-Bereich (T-F) transformiert, so dass entsprechende Kurzzeitspektren eines binauralen Gesamtsignals erhalten werden. Mit einer derartigen Filterbank 22 kann aber das Eingangssignal auch in eine andere Darstellung transformiert werden.

Das Ausgangssignal der Filterbank 22 wird einer Merkmalsextraktionseinheit 23 zugeleitet. Die Funktion der Merkmalsextraktionseinheit 23 besteht darin, die Merkmale zu schätzen, die für eine zuverlässige (modellbasierte) Detektion und eine eindeutige Unterscheidung zwischen Signalklassen verwendbar sind. Solche Merkmale sind beispielsweise die Harmonizität (Intensität harmonischer Signalanteile), Startcharakteristiken von Signalanteilen, Grundfrequenz stimmhafter Laute (Pitch) und selbstverständlich auch eine Auswahl mehrerer derartiger Merkmale.

Basierend auf den extrahierten Merkmalen der Extraktionseinheit 23 versucht eine Detektionseinheit 24 bekannte Signalanteile aus dem Signal der Filterbank 22 im z. B. T-F-Bereich zu detektieren und zu extrahieren (isolieren). Wenn beispielsweise die Schätzung der Richtung eines oder mehrerer Sprecher gewünscht ist, können die gesuchten Signalanteile Vokale sein. Um Vokale zu detektieren, kann das System nach Signalanteilen mit hoher Harmonizität (also ausgeprägten Harmonischen) und einer spezifischen Formantenstruktur suchen. Die Vokaldetektion ist jedoch ein heuristischer bzw. unsicherer Ansatz, und ein universelles CASA-System soll in der Lage sein, auch andere Klassen als Sprache detektieren zu können. Daher soll ein eher theoretischer Ansatz auf der Basis überwachten Lernens und möglichst optimaler Merkmalsextraktion verwendet werden.

Das vorrangige Ziel dieses Detektionsblocks 24 ist es nicht, jedes Auftreten der besonderen Signalanteile zu detektieren, sondern nur diejenigen Anteile zu erkennen, deren Detektion verlässlich ist. Wenn einige Blöcke durch das System nicht zugeordnet werden können, ist die Zuordnung anderer immer noch möglich. Eine falsche Detektion eines Signals hingegen verminderte die Aussagekraft der nachfolgenden Signalblöcke.

In einem nächsten Schritt eines erfindungsgemäßen Algorithmus erfolgt ein entscheidungsgesteuertes Filtern 25 (DDF: Decision Directed Filtering). Das detektierte Signal wird aus der Signalmischung herausgefiltert, um die Leistungsfähigkeit der nachfolgenden Verarbeitungsblöcke (hier Lokalisierung) zu steigern. Beispielsweise kann wieder das Detektieren von Vokalen in einem Sprachsignal betrachtet werden. Wenn ein Vokal detektiert wird, kann beispielsweise seine geschätzte Formantenstruktur genutzt werden, um unerwünschte Interferenzen auszufiltern, die außerhalb der Formantenstruktur registriert werden.

In einem letzten Schritt des Algorithmus wird ein frei wählbares Lokalisierungsverfahren 26 auf der Basis der extrahierten Signalanteile des Filters 25 durchgeführt. Die Position der Signalquelle zusammen mit der passenden Klasse wird dann zur Beschreibung der akustischen Szene 27 verwendet. Die Lokalisierung kann beispielsweise durch einfache kumulative Statistiken 28 oder durch Einsatz hochentwickelter Ansätze, wie beispielsweise das Verfolgen jeder Quelle im Raum um den Hörer, erfolgen.

Der signifikanteste Vorteil des erfindungsgemäßen Verfahrens gegenüber anderen Algorithmen ist, dass das Problem des Gruppierens bestimmter T-F-Werte bzw. Blöcke (ähnlich dem bekannten Problem der blinden Quellentrennung) nicht gelöst werden muss. Auch wenn sich die aus dem Stand der Technik bekannten Systeme vielfach unterscheiden (Anzahl der Merkmale und unterschiedliche Gruppierungsansätze) besitzen all diese Systeme im Wesentlichen die gleichen Einschränkungen. Sobald die T-F-Blöcke durch eine feste Entscheidungsvorschrift voneinander isoliert sind, müssen sie wieder zusammen gruppiert werden. Die Information in den einzelnen kleinen Blöcken ist jedoch üblicherweise für das Gruppieren bei realen Szenarien nicht ausreichend. Im Gegensatz dazu ermöglicht der erfindungsgemäße Ansatz wegen der Nutzung des gesamten Frequenzbereichs (nicht nur einzelner Frequenzen bzw. einzelner Frequenzbänder) eine Einzelquellenlokalisierung mit hoher Präzision.

Eine weitere bemerkenswerte Eigenschaft des vorgeschlagenen Systems ist die Fähigkeit, in der gleichen Richtung auch mehrere Quellen zu detektieren und zu lokalisieren, wenn sie unterschiedlichen Klassen angehören. Beispielsweise kann eine Musikquelle und eine Sprachenquelle mit dem gleichen DOA (Direction of Arrival) korrekt als zwei Signale in zwei Klassen identifiziert werden.

Das erfindungsgemäße System kann außerdem mit einem Sprecheridentifikationsblock erweitert werden, so dass ein Nachverfolgen eines gewünschten Signals möglich wird. Der praktische Nutzen könnte beispielsweise darin liegen, dass eine gewünschte Quelle (beispielsweise ein dominanter Sprecher oder eine vom Hörgeräteträger gewählte Sprachenquelle) lokalisiert und identifiziert wird. Dann, wenn sich die Quelle im Raum bewegt, verfolgt das Hörgerätesystem automatisch ihre Position und kann beispielsweise einen Strahlformer in die neue Richtung lenken.

Der erfindungsgemäße Algorithmus ist gegebenenfalls auch in der Lage, eine Datenrate zwischen einem linken und einem rechten Hörgerät (Drahtlosverbindung) zu reduzieren. Werden nämlich für die Lokalisierung nur die detektierten Anteile (oder sogar nur ihre Repräsentanten) des linken und des rechten Signals zwischen den Hörgeräten übertragen, so müssen deutlich weniger Daten übertragen werden als bei der vollständigen Signalübertragung.

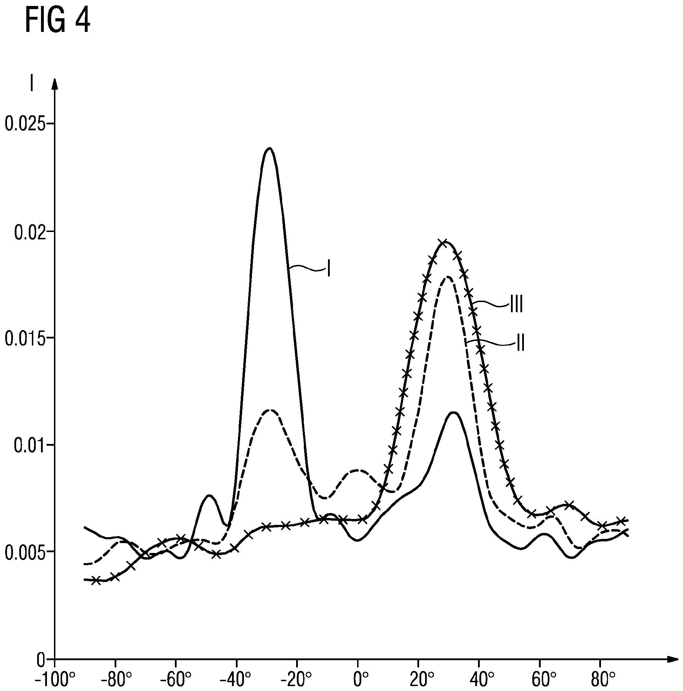

Der erfindungsgemäße Algorithmus erlaubt das Lokalisieren gleichzeitiger akustischer Quellen mit hoher räumlicher Auflösung zusammen mit deren Klassifikation. Zur Illustration der Leistungsfähigkeit dieses neuen Ansatzes wird in FIG 4 eine Lokalisierung von Vokalen in einer komplexen akustischen Szene dargestellt. Die Szene besteht darin, dass eine Sprachquelle in einer Richtung von ϕ = 30° vorhanden ist und eine Leistung P = -25 dB besitzt. Eine Musikquelle befindet sich bei ϕ = -30° und besitzt eine Leistung P = -25 dB. Außerdem liegt diffuses Sprachgeräusch mit einer Leistung von P = -27 DB sowie gaußsches Rauschen mit einer Leistung von P = -70 dB vor. In dem Diagramm von FIG 4, indem die Intensität bzw. Leistung nach oben aufgetragen ist und der Winkel in Grad nach rechts aufgetragen ist, sind im Wesentlichen zwei Signalhügel festzustellen, die die zwei Signalquellen (Sprachquelle und Musikquelle) repräsentieren. Die Kurve I zeigt das Eingangssignal im gesamten Frequenzspektrum nach der Filterbank 22 (vgl. FIG 3). Das Signal ist hier noch nicht weiter verarbeitet. Die Kurve II zeigt das Signal nach einer Detektion von Vokalen durch die Detektionseinheit 24 (vgl. FIG. 3). Schließlich repräsentiert die Kurve III das Lokalisierungsergebnis nach der Filtereinheit 25 (vgl. ebenfalls FIG 3), wobei eine bekannte, ideale Formantenmaske verwendet wird. Entsprechend der Kurve III kann also die Sprachquelle eindeutig lokalisiert werden.

Der erfindungsgemäße Algorithmus kann modifiziert werden. So kann beispielsweise ein Signal bzw. seine Quelle nicht nur lokalisiert und klassifiziert werden, sondern die entsprechende Information kann auch in den Klassifikationsdetektor 24 rückgekoppelt werden, so dass sich das Lokalisierungsergebnis iterativ verbessern lässt. Die Rückkopplung kann aber auch dazu genutzt werden, um eine Quelle zu verfolgen. Des Weiteren kann dieser Ansatz dazu dienen, eine Kopfdrehung zu bestimmen. Dabei kann das System alleine verwendet werden oder als Teil eines physikalischen Kopfbewegungsdetektionssystems mit Beschleunigungsmessern.

Eine weitere Modifikation des Systems kann darin bestehen, dass eine geschätzte Richtung (DOA) eines gewünschten Signals für die Steuerung eines Strahlformers vor einem Detektor benutzt wird, um die Leistungsfähigkeit eines Gesamtsystems zu verbessern.

Das oben angeführte Beispiel bezieht sich auf die Lokalisierung einer Sprachquelle. Das vorgeschlagene System kann aber auch andere Klassen von Signalen detektieren. Um unterschiedliche Signale zu detektieren und zu klassifizieren, müssen unterschiedle Merkmale und gegebenenfalls unterschiedliche Repräsentanten der Signale verwendet werden. Wenn beispielsweise eine Detektion eines Musiksignals gewünscht wird, muss das System mit unterschiedlichen Musikinstrumenten trainiert werden, und es muss ein geeigneter Detektor verwendet werden.

Das Prinzip des erfindungsgemäßen Systems ist vorrangig als Algorithmus für Hörgeräte realisiert. Der Einsatz ist jedoch nicht auf Hörgeräte beschränkt. Vielmehr kann ein derartiges Verfahren auch für Navigationssysteme von blinden Personen verwendet werden, um beispielsweise spezielle Geräusche auf öffentlichen Plätzen zu lokalisieren oder bei einer noch anderen Anwendung fehlerhafte Teile in einer großen Maschine auf akustischem Wege zu finden.

### Bezugszeichenliste

- 1: Hörgerätegehäuse
- 2: Mikrofon
- 3: Signalverarbeitungseinheit
- 4: Lautsprecher bzw. Hörer
- 5: Batterie
- 10: Mikrofon
- 11: Mikrofon
- 12: Filterbank
- 13: Segmentierungseinheit
- 14: Merkmalsextraktionseinheit
- 15: Lokalisierung
- 16: Gruppierungseinheit
- 17: Analyse
- 18: Klassifikationseinheit
- 19: Szene
- 20: Mikrofon
- 21: Mikrofon
- 22: Filterbank
- 23: Merkmalsextraktionseinheit
- 24: Detektionseinheit
- 25: Filter
- 26: Lokalisierungsverfahren
- 27: Szene
- 28: Statistiken

- I, II, III: Kurven

## Patentansprüche

1. Verfahren zum Lokalisieren mindestens einer Audioquelle mit einem mehrkanaligen Hörsystem
**gekennzeichnet durch**
- Detektieren (24) eines Signals einer vorgegebenen Klasse, das von der Audioquelle herrührt, in einem Eingangssignal (I) des mehrkanaligen Hörsystems, wobei
bei dem Detektieren vorgegebene Merkmale des Eingangssignals (I) untersucht werden, und bei Vorhandensein der vorgegebenen Merkmale in einer für die Klasse vorgegebenen Intensität das Signal der vorgegebenen Klasse in dem Eingangssignal als detektiertes Signal gilt,
vor dem Lokalisieren (26) in Abhängigkeit des detektierten Signals Signalanteile aus dem Eingangssignal gefiltert werden, um einen Nutzsignalanteil bezüglich der zu lokalisierenden Quelle zu erhöhen, und
- anschließendes Lokalisieren (26) der Audioquelle anhand der aus dem Eingangssignal gefilterten Signalanteile.

2. Verfahren nach Anspruch 1, wobei die vorgegebenen Merkmale harmonische Signalanteile oder Formanten sind.

3. Verfahren nach Anspruch 2, wobei die vorgegebene Klasse "Sprache" ist.

4. Verfahren nach einem der vorhergehenden Ansprüche, wobei in dem Eingangssignal mehrere Signale der vorgegebenen Klasse detektiert und nach vordefinierten Kriterien unterschiedlichen Audioquellen zugeordnet werden.

5. Verfahren nach Anspruch 4, wobei die unterschiedlichen Audioquellen mehrere Sprecher sind.

6. Verfahren nach einem der vorhergehenden Ansprüche, wobei das mehrkanalige Hörsystem ein binaurales Hörsystem ist und für das Lokalisieren (26) nur gefilterte Signalanteile des Eingangssignals zwischen den Einzelgeräten des binauralen Hörsystems übertragen werden.

7. Mehrkanaliges Hörsystem mit mehreren Eingangskanälen, welches ausgebildet ist, das Verfahren nach Anspruch 1 durchzuführen.

## Claims

1. Method for localizing at least one audio source using a multichannel hearing system,
**characterized by**
- detection (24) of a signal in a prescribed class, which signal stems from the audio source, in an input signal (I) in the multichannel hearing system, wherein
the detection involves prescribed features of the input signal (I) being examined, and the presence of the prescribed features at an intensity which is prescribed for the class prompts the signal in the prescribed class to be deemed to be the detected signal in the input signal,
the localization (26) on the basis of the detected signal is preceded by signal components being filtered from the input signal, in order to increase a useful signal component relative to the source to be localized,
and
- subsequent localization (26) of the audio source using the signal components filtered from the input signal.

2. Method according to Claim 1, wherein the prescribed features are harmonic signal components or formants.

3. Method according to Claim 2, wherein the prescribed class is "voice".

4. Method according to one of the preceding claims, wherein a plurality of signals in the prescribed class are detected in the input signal and are associated with different audio sources on the basis of predefined criteria.

5. Method according to Claim 4, wherein the different audio sources are a plurality of speakers.

6. Method according to one of the preceding claims, wherein the multichannel hearing system is a binaural hearing system and the localization (26) involves only filtered signal components of the input signal being transmitted between the individual appliances in the binaural hearing system.

7. Multichannel hearing system having a plurality of input channels, which system is configured to carry out the method according to Claim 1.

## Revendications

1. Procédé pour localiser au moins une source audio avec un système auditif à plusieurs canaux, **caractérisé par**
- la détection (24) d'un signal d'une classe prédéfinie, lequel provient de la source audio, dans un signal d'entrée (I) du système audio à plusieurs canaux, dans lequel
lors de la détection, des caractéristiques prédéfinie du signal d'entrée (I) sont analysées et en cas de présence des caractéristiques prédéfinies selon une intensité prédéfinie pour la classe, le signal de la classe prédéfinie dans le signal d'entrée est considéré en tant que signal détecté,
avant la localisation (26), en fonction du signal détecté, des fractions de signal sont filtrées à partir du signal d'entrée pour augmenter une fraction de signal utile concernant la source à localiser, et
- la localisation (26) qui s'en suit de la source audio à l'aide des fractions de signal filtrées à partir du signal d'entrée.

2. Procédé selon la revendication 1, dans lequel les caractéristiques prédéfinies sont des fractions harmoniques de signal ou des formants.

3. Procédé selon la revendication 2, dans lequel la classe prédéfinie est « parole ».

4. Procédé selon l'une des revendications précédentes, dans lequel, dans le signal d'entrée, plusieurs signaux de la classe prédéfinie sont détectés et sont associés selon des critères prédéfinis à différentes sources audio.

5. Procédé selon la revendication 4, dans lequel les différentes sources audio sont plusieurs locuteurs.

6. Procédé selon l'une des revendications précédentes, dans lequel le système auditif à plusieurs canaux est un système auditif binaural et, pour la localisation (26), seulement des fractions de signal filtrées du signal d'entrée sont transmises entre les appareils individuels du système auditif binaural.

7. Système auditif à plusieurs canaux avec plusieurs canaux d'entrée, lequel est réalisé pour mettre en oeuvre le procédé selon la revendication 1.
